# EUROPEAN PATENT APPLICATION

(11) **EP 2 535 182 A1**
(43) Date of publication of application: **19.12.2012**
(21) Application number: 12171670.8
(22) Date of filing: 12.06.2012
(51) Int. Cl.: B32B 18/00

(54) **Method for manufacturing a composite surface**

(30) Priority: 16.06.2011 US 201113161549
(71) Applicant: General Electric Company, Schenectady, NY 12345 (US)
(72) Inventor: Roberts lll,, Herbert Chidsey, Greenville, SC 29615 (US); Brittingham, Robert Alan, Greenville, SC 29615 (US)
(74) Representative: Cleary, Fidelma

(57) **Abstract**

A method for manufacturing a composite (10) includes perforating an outer ply (14) to create perforations (22) through the outer ply (14) and inserting a filler material into the perforations (22). The method further includes laminating the outer ply (14) to an inner ply.

## Description

### FIELD OF THE INVENTION

The present invention generally involves a method for manufacturing a composite surface. Particular embodiments of the present invention may produce a laminated ply assembly having an interrupted ceramic surface profile.

### BACKGROUND OF THE INVENTION

Ceramic matrix composites are commonly used in high temperature applications because of their low weight and high heat resistance. Shrouds for gas turbine engines include mounting features to engage with adjacent support structures to retain the shroud segment. Mounting features between ceramic matrix composites and metal structures include an engagement tolerance within the retaining features to permit differing thermal growths between the shroud segments and the support structure. The shrouds are often made from or coated with a ceramic matrix composite that is lighter than superalloys and can also withstand the high temperature environment associated with a hot gas path. The tolerance in the attachment of the shroud to the outer case may result in undesirable movement or vibration of the shroud. As a result, a mechanical damper may be placed against the shroud to reduce or prevent vibration of the shroud. The mechanical damper, often made from but not limited to metals, acts as a mass against the shroud, and the resulting friction between the mechanical damper and the shroud reduces or prevents relative motion of the shroud.

Over time, the continuous contact between the ceramic material in the shroud and the mechanical damper may have an abrasive effect on the mechanical damper. Specifically, temperature changes, pressure changes, vibrations, and other dynamic forces may cause the ceramic material to abrade or erode the adjacent metal surfaces of the mechanical damper. The abrasion or erosion of the mechanical damper reduces the effectiveness of the mechanical damper, requiring increased maintenance and inspections to avoid premature failure and/or unanticipated outages.

Reducing the surface area of the ceramic material in contact with the mechanical damper is one method to reduce the erosive wear on the mechanical damper. For example, prior attempts to reduce the surface area of the ceramic material in contact with the mechanical damper have focused on post-fabrication removal of local areas in the ceramic surface and/or the application of a wear inhibiting material to the ceramic component and/or mechanical damper. However, the post-fabrication removal of ceramic material in a localized area is difficult to accomplish. For example, portions of the ceramic component may be inaccessible to post-fabrication machining, and inadvertent excessive removal of the ceramic material may damage the component, resulting in additional costly repairs. The application of a wear inhibiting material, as in a coating form, may be complicated by the ability to successfully bond the wear inhibiting material to the ceramic component and/or mechanical damper. Once bonded, the wear inhibiting material will be under extended distress due to cyclic loading of the contact pressure between the ceramic component and the mechanical damper, and the high temperatures associated with the hot gas path may break down the bond strength, resulting in a limited life of the bond.

Therefore, an improved method for manufacturing a composite surface that reduces wear between the ceramic materials and mating metallic surfaces would be useful.

### BRIEF DESCRIPTION OF THE INVENTION

Aspects and advantages of the invention are set forth below in the following description, or may be obvious from the description, or may be learned through practice of the invention.

The present invention resides in a method for manufacturing a composite. The method includes perforating an outer ply to create perforations through the outer ply and inserting a filler material into the perforations. The method further includes laminating the outer ply to an inner ply.

The method may further include forming an outer composite ply and removing portions from the outer composite ply to create perforations through the outer composite ply.

Those of ordinary skill in the art will better appreciate the features and aspects of such embodiments, and others, upon review of the specification.

### BRIEF DESCRIPTION OF THE DRAWINGS

Embodiments of the present invention will now be described, by way of example only, with reference to the accompanying drawings in which:
Fig. 1 is a perspective view of a single ply being processed to create an interrupted surface profile according to one embodiment of the present invention;
Fig. 2 is a perspective view of the single ply shown in Fig. 1 with a filler material being added to the interrupted surface profile; and
Fig. 3 is a perspective view of a laminated ply assembly according to one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include methods for manufacturing a composite material having a localized interrupted surface on an outer surface of the composite. In particular embodiments, multiple layers or plies of ceramic, metal, and/or organic matrix composites may be laminated together with the localized interrupted surface on the outer surface of the laminate. As a result, the method produces the desired interrupted surface without requiring post-fabrication machining or other processing to achieve the desired surface characteristics.

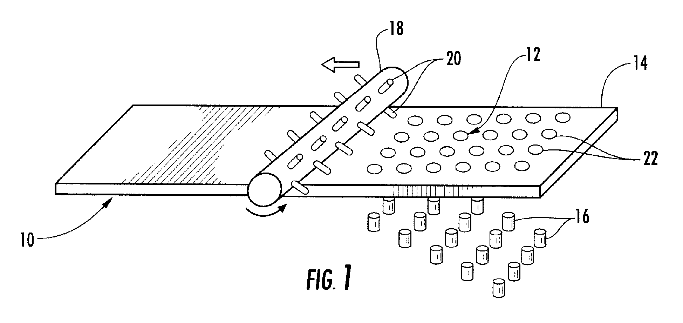

Fig. 1 provides a perspective view of a single ply 10 being processed to create an interrupted surface 12 over at least a portion of the ply 10 according to one embodiment of the present invention. In this particular embodiment, the single ply 10 comprises a ceramic matrix composite 14, although alternate embodiments of the present invention may incorporate metal and/or organic matrix composites. The ceramic matrix composite 14 may be incorporated as an outer composite ply in multilayer laminate composites because of its low weight and high heat resistance. The ceramic matrix composite 14 may include a silicon-based material, such as silicon oxide (SiO₂), silicon carbide (SiC) or silicon nitride (Si₃N₄), although alternate embodiments of the present invention may include ceramic matrix composites 14 based on tungsten carbide (WC), zirconia (ZrO₂), boron carbide (B₄C), or other ceramics known in the art. In addition, the ceramic matrix composite 14 may include carbon, ceramic, metallic, organic, inorganic, and/or glass reinforcing fibers throughout the ceramic matrix. Alternately, or in addition, ceramic reinforcing fibers having a thin coating of boron nitride (BN) may be added to the ceramic matrix. The reinforcing fibers may be woven or spun into the ceramic matrix to produce a desired ply 10 thickness of approximately 0.001 to 0.020 inches. However, the actual thickness of the ply 10 depends on the presence and size of any reinforcing fibers and the intended use of the ceramic matrix composite 14 and is not a limitation of the present invention unless specifically recited in the claims.

As shown in Fig. 1, the method includes removing portions 16 of the composite ply 10 to create the interrupted surface 12. The portions 16 may be removed using any technique known in the art for finishing a ply. For example, a rotary drill, electrical discharge machine, or laser drill may be used to bore through or perforate the ply 10 to precisely ablate or remove portions 16 of the ply 10 to produce the resulting interrupted surface 12 on the ply 10. Alternately, as shown in Fig. 1, a press 18 with projecting tines 20 may be rolled over the ply 10 to create indentions or perforations 22 in the ply 10. The indentions or perforations 22 may have a diameter and spacing of greater than approximately 0.01 inches and less than approximately 2.5 inches. The specific size and spacing of the indentions or perforations 22 may be determined by one of ordinary skill in the art with minimal experimentation to achieve the desired dimensions of the interrupted surface 12 without excessively weakening the strength of the ply 10, and the precise size and spacing of the indentions and perforations 22 is not a limitation of the present invention unless specifically recited in the claims.

Fig. 2 provides a perspective view of the single ply 10 shown in Fig. 1 with a filler material 24 being added to the interrupted surface 12. Left untreated, the indentions or perforations 22 in the ceramic matrix composite 14 may be susceptible to back filling, and adding the filler material 24 to the indentions or perforations 22 thus replaces some or all of the removed portions 16 to prevent backfilling in the ceramic matrix composite 14. In addition, the filler material 24 added to the ceramic matrix composite 14 maintains the interrupted surface 12 during the remaining fabrication process without disrupting the integrity of the ply 10. The filler material 24 may comprise any non-binding paste, gel, semi-solid, or other material that may be injected into the indentions or perforations 22 or otherwise applied to the interrupted surface 12. For example, the filler material 24 may comprise boron nitrite, graphite, polytetrafluoroethylene, micro-balloons structures, or virtually any other non-binding lubricant suitable for the anticipated environment. The filler material 24 may be injected or applied to individual perforations 22 so that the filler material 24 partially or completely fills the indentions or perforations 22. For example, as shown in Fig. 2, a layer of the filler material 24 may be applied to the ply 10 to completely fill the indentions or perforations 22 in the interrupted surface 12. If desired, a level 26 may be drawn across the ply 10 may remove excess filler material 24 from the ply 10 that is outside of the indentions or perforations 22.

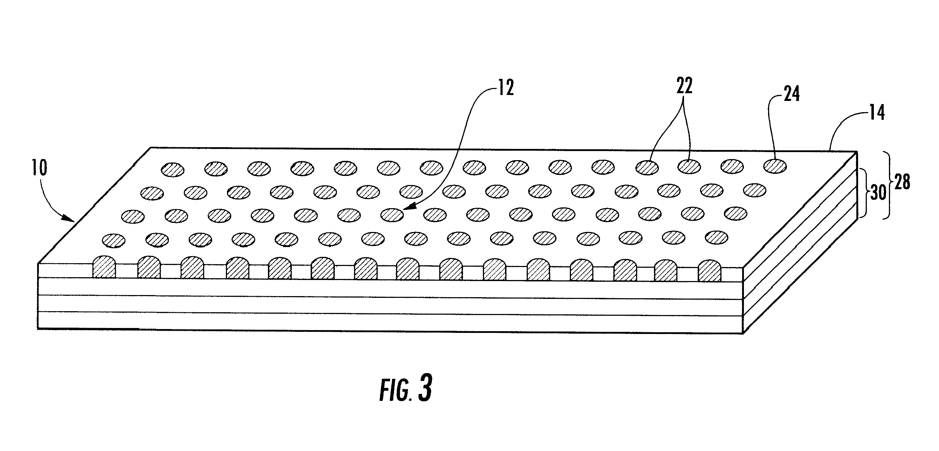

Fig. 3 provides a perspective view of a laminated ply assembly 28 according to one embodiment of the present invention. As shown, the single ply 10 may be attached or laminated to one or more inner plies 30 to produce the laminated ply assembly 28. The inner plies 30 may comprise one or more of a ceramic matrix composite, a metal matrix composite, or an organic matrix composite. For the applications considered herein, the various plies 10, 30 may be formed as single- or multi-dimensional woven fabric, and the method of manufacturing, laminating, and shaping the various plies 10, 30 to form the desired component are not meant to limit the present invention. For example, the individual plies 10, 30 may be separately formed as layers of tape laminated to a substrate to produce the desired component.

The method of manufacture described herein thus provides several technical and commercial advantages over existing post-fabrication machining techniques. For example, the removal of the portions 16 from the single ply 10 prior to formation of the system component allows unrestricted access to the entire surface area of the single ply 10 to permit precise positioning of the interrupted surface 12 at the desired location without risking accidental damage to the inner plies 28 of the system component. In addition, the precise placement of the interrupted surface 12 is not limited by the final shape, location, or accessibility of the system component.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal languages of the claims.

## Claims

1. A method for manufacturing a composite (10), comprising:
a. perforating an outer ply (14) to create perforations (22) through the outer ply;
b. inserting a filler material (24) into the perforations (22) ; and
c. laminating the outer ply (14) to an inner ply (30).

2. The method as in claim 1, further comprising forming the outer ply (14) from a ceramic matrix composite.

3. The method as in claim 1 or 2, wherein the perforating comprises drilling through the outer ply (14) to create the perforations (22) through the outer ply (14).

4. The method as in any of claims 1 to 3, further comprising filling at least a portion of the perforations (22) in the outer ply (14) with a lubricant.

5. The method as in any of claims 1 to 4, further comprising filling at least a portion of the perforations (22) in the outer ply (14) with at least one of boron nitrite or polytetrafluoroethylene.

6. The method as in any of claims 1 to 5, wherein the laminating comprises laminating the outer ply (14) to at least one of a ceramic matrix composite, a metal matrix composite, or an organic matrix composite.
